# EUROPEAN PATENT SPECIFICATION

(11) **EP 1 665 928 B1**
(45) Date of publication and mention of the grant of the patent: **24.09.2008**
(21) Application number: 04766925.4
(22) Date of filing: 30.08.2004
(51) Int. Cl.: A01K 23/00

(54) **DEVICE COMPRISING A DISPOSABLE BAG FOR THE COLLECTION OF ANIMAL EXCREMENT**
VORRICHTUNG MIT EINEM WEGWERFBEUTEL ZUM AUFSAMMELN VON TIEREXKREMENTEN
DISPOSITIF A SAC JETABLE DE COLLECTE D'EXCREMENTS ANIMAUX

(30) Priority: 02.09.2003 AR 0303172
(43) Date of publication of application: 07.06.2006
(73) Proprietor: Bosio Blanco, Carlos Conrado, C.P. 08240 Manresa, Barcelona (ES); Blanco, Roberto Horacio, C.P. 1611 Don Torcuato, Buenos Aires (AR); Klarenberg, Alejandro Jose, C.P. 1611 Don Torcuato, Buenos Aires (AR)
(72) Inventor: Bosio Blanco, Carlos Conrado, C.P. 08240 Manresa, Barcelona (ES); Blanco, Roberto Horacio, C.P. 1611 Don Torcuato, Buenos Aires (AR); Klarenberg, Alejandro Jose, C.P. 1611 Don Torcuato, Buenos Aires (AR)
(74) Representative: Serrat Viñas, Sara
(86) International application number: PCT/ES2004/000386
(87) International publication number: WO 2005/020676

(56) References cited:
- WO-A1-94/09619
- ES-U- 1 026 532
- ES-U- 1 056 644
- US-A- 5 819 691

## Description

This invention relates in general with environmental non polluting devices, and specifically it relates to a disposable bag device for the collection of animal excrements, which has as it main objective the provision of an effective animal excrement collection capacity, applicable for instance to a dog, with the finality to collect said excrements at the same they are being produced, avoiding by this the environmental contamination.

It is the main object of this instant invention to render a simple device easy to apply to the pet before its outdoor walk, being generally this the time at which the animal provides to relieve itself.

The device of this invention provides a good adaptability of the disposable collecting bag for the excrement deposition around the anal orifice of the pet.

Another object of this instant invention is to be found in its intrinsic nature allowing the pet's owner a clean, fast and assured hygienic handling of this device, closing ad withdrawing the disposable bag immediately after the excrement deposition which will be enclosed within said bag, waiting to be discarded in an appropriate place.

The structural embodiment of this instant invention allows it to be rapidly adapted to a pet of any size, without causing undue inconveniencies to the pet or hindrance to its normal behavior until its withdrawal once its purpose has been achieved.

### Prior Art and prior disclosures:

The Prior Art in this subject recognizes several constructions that have been thought in order to eliminate the contamination of open spaces and gardens with organic residues produced by the domestic animals during their outdoor stays.

To solve the above stated problem it has been proposed the collection of the pet's excrement by means of small shovels, placing said depositions into bags that when closed are discarded into any street or public trash collector.

Argentine Patent application AR P98 01 06432 teaches "A disposable excrements collector basically applicable to dogs". This construction is made of a bellow type bag facing the anal orifice of the dog. The bag has in its perimeter determined elements allowing tying this bag to the tail of the animal, its hind legs and a cord or thread to close said bag. This construction faces the following problems: The means or elements that can be used to tie the bag to the tail of the dog and to connect it with the hind legs determines complicated fastenings requiring adjustments in order to avoid its detachment or displacement, providing the animal with a source of nuisance due to the increased pressure over the parts of its body. Moreover it is cumbersome to withdraw this device from the animal, once if has been used.

Patent WO 01/43537A1 teaches a simple pet's excrement collector. It is made of an annular inner stripe over which it is applied to the collecting bag fastened by means of another stripe attached over the first one. Said stripes are placed around the anus and are maintained in position by means of two loops sustained by lateral threads laid along the inner hind legs of the dog, looping over its hip and joined over the back of the animal with two other threads tied to the inner annular stripe and extended on both sides of the tail. To withdraw the bag retained between said two stripes this whole set-up has to be disassembled, while the bag has to be closed manually.

Patent US-A-4, 813,949 teaches a "Diaper for dogs" made of a textile stripe shaped as a "T" for the body and tail. A bifurcation projects from the center of said stripe with "Velcro" fasteners in one or both ends and an absorbent pad is fixed on the inner face of the stripe facing the tail. It follows from this construction it offers a partial and limited protection.

German patent DE 19.827.997 offers another "Disposable diaper for dogs of all sizes". Is quite similar in its shape to the know diapers for babies, fastened by means of adhesive fastening stripes.

Patent US-A-6,059,332 teaches a "Domestic pet's excrement collector". It comprises two similar rectangular structures facing each other and joined in between by a posterior concave-convex wall forming a pincer-shaped hinge for said collector. Over the convex face of the wall a transversal is fixed a cylindrical tube closed at one end, having inside of said tube a roll of continuous bags, while the other end of said tube is closed by a lid. The plastic bag is placed covering said collecting pincers. The bottom of the bag is contained within the pincers towards the cylindrical tube. This complex construction does not interfere with the present invention.

Patent US-A-5,819,691 discloses a device comprising a bag, an annular and a substantially rigid element of cardioid shape and elastic-thread like elements with loops at their free ends. The device does not comprise a thermo-soldered tuck around its opening, in which said rigid element is placed, and hooks at the end of the elastic elements.

Patent WO9409619 describes a device consisting of a bag which comprises an hole for the dog's tail and a closing string around its perimeter. In this case, the bag is not removed from the harness and disposed since all the divice is disposable.

None of the mentioned Prior Art patents offers a construction similar to this instant invention, providing a very simple solution having a low cost base structure or frame, to which is attached the disposable plastic bags within which the pet's depositions are collected at the same time they are being produced, such as detailed down below.

Once the bag has been used, it is withdrawn in a rapid and hygienic manner, providing to its hermetic closing and ready to be discarded.

### Description of the preferred embodiment of this invention:

This instant invention comprises a disposable laminar thermoplastic material bag used for the collection of the excrements offers an ideal solution to the above stated problems, and it is identified by having around the opening of said bag a tuck in its perimetral edge, within which slides a cord defining the free ends of said cord emerging from said tuck the closing means of the bag; concentrically adhered to a part of the surface of the bag and coaxially adjacent to its opening and tuck it is fitted, within the tuck, an annular stripe made of a semi-rigid material, provided in its upper and lower parts of its outer perimeter with attachment means to corresponding elastic threads; of said elastic threads, one of them has a shorter length and is connected to another longer thread between the ends thereof and closing around the animal's tail, while the other elastic threads are anchored to the body of the animal, providing these elastic threads the positioning means of this device on said animal placing the bag's opening and the enclosed area of said annular stripe around the anal orifice of the animal; in coincidence to each of the threads attachment means placed in the outer perimeter of said annular element, it is found at its inner perimeter a set of corresponding seats retaining a portion of said bag's surface adjacent to said tuck, acting as retaining means a portion of length of the corresponding elastic thread looping around said portion of the bag and connected to said pair of attachment means and seats, while interposed between each portion of the surface bag thus retained and said seats it is placed a portion of said cord sliding within said tuck; determining said cord when pulled at its end the contemporary closing of the bag's opening and the release of said portion of the bag from said seats and its retaining means.

In order to provide a detailed and comprehensible construction of this instant invention consisting in a device with a disposable bag for collecting animal excrements, applicable to dogs and other domestic animals at the same moment in which said depositions are being produced, thus enabling to exemplify how this invention may be practically rendered, it follows a precise description of one of the preferred embodiments of this instant invention with the aid of the enclosed drawings, being given this description and drawings as a mere illustrative example of the invention with any limitative purpose to its actual scope, while its means and components may be selected between several divers equivalents without moving away of the scope of this invention as defined in this instant documentation.

In the enclosed drawings:
Figure 1 shows a schematic frontal view of this invention's device with the disposable bag in its unfolded position;
Figure 2 depicts a perspective view of Figure 1;
Figure 3 depicts another construction of this invention;
Figure 4 shows still another embodiment of the main constituent part of this invention;
Figure 5 shows another possible construction of this same invention;
Figure 6 is a schematic view showing how on of the above embodiments is applied to a dog;
Figure 7 depicts another view of the dog fitted with this hygienic device;
Figure 8 shows a partial view of said dog at the moment in which this collecting device filled with the dog's excrements is being withdrawn from the animal.

In said drawings the same references corresponds to the same components or means or its equivalents.

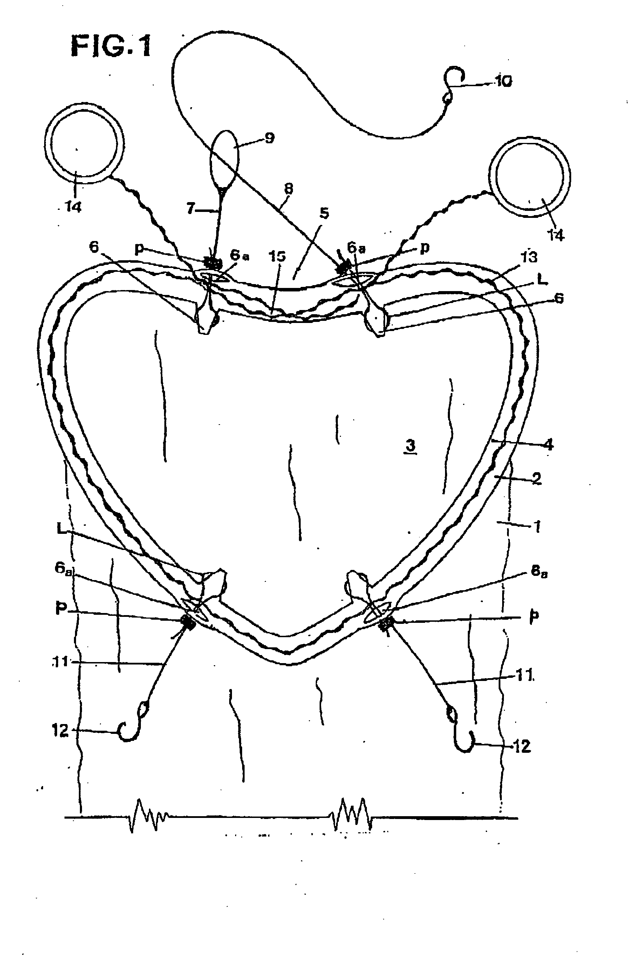

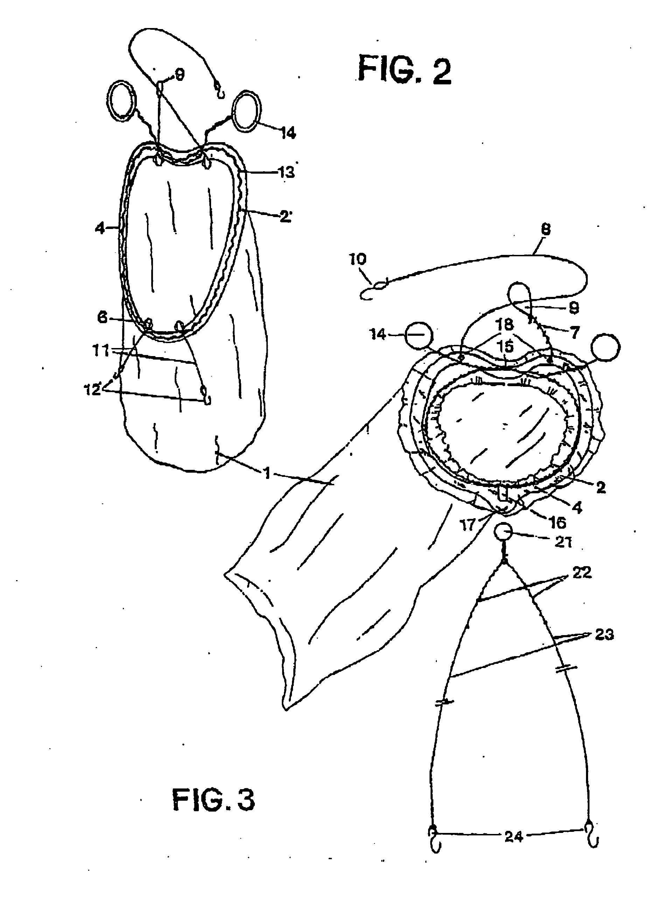

Figures 1 and 2 depicts the device of this invention with its disposable collecting bag (1), being this bag of the kind manufactured from a polymeric film, fitted at its opening edge with an annular stripe (2) coplanar to its opening (3). A fold of this bag can be thermo-soldered to facilitate its fitting and once this annular element is fitted, it determines a tuck (4). Any other appropriate form or adhesive that may be suitable to maintain in position this annular stripe (2) may be also used.

Said annular element (2) is made from a material having a relative rigidity, such as aluminum, cardboard or the like, giving to said annular stripe essentially a cardioid shape, with is concavity (5) in its upper end. Projecting into its inner area it has a series of triangular teeth (6) in coincidence with the bag's opening (3), having at these same places eyelets (6a) performed in said annular element (2). Elastic threads (7, 8) are engaged to the upper teeth through small loops - Land said threads being driven through said respective eyelets (6a) are latched in their position by means of knots or seals -p-. Thread (7) is shorter and it ends into a loop (9), while thread (8) is longer and it ends in a hook (10).

Alternately threads (7, 8) have the same length and they may end with corresponding hooks (10), for their independent engagement.

The other teeth (6) placed at the lower edge of the annular stripe (2) are engaged, similarly as for the upper teeth, to two other tightening elastic threads (11) threaded through the corresponding eyelets (6a) and ending in hooks (12).

Concentric to the opening (3) of the bag (3) within the tuck (4) that carries said annular element, or of any other construction to this same ends, it is placed a cord (13) with two rings (14) at its respective ends which cross each other when they reach the upper concavity (5), or the opposed lower edge according to the laying out of the tuck (4), forming a loose knot (15).

Figure 3 shows a first embodiment of this invention having the bag (1) ready to operate as an excrement collector. This embodiment is provided with an annular stripe (2) similar to the former but lacking said inner teeth. This stripe (2) is placed coincidental with the bag's opening (3) and is adhered and/or attached around said opening, such as in the former case, with its concavity (5) similarly placed, further having two orifices (18) symmetrically placed at both sides of said concavity in its upper part and with a slot (16) performed in its internal lower edge, followed by an appendage (17).

Similar to the former construction and concentric with the bag's opening (3), is placed within said tuck (4), (or to any other equivalent constructions as used) said cord (13) with its end rings (14) and its knot (15) placed in correspondence with the zone of the cardioid concavity (5). Two elastic threads are threaded through said orifices (18), retained by corresponding knots. One of said threads, such as thread (7) as mentioned in the previous embodiment, is relatively shorter and provided at its end with a loop (9), while the larger thread (8) is threaded through said loop (9), having at its end a hook (10).

The device comprises also an independent thread provided at one end thereof with a body in the shape of a sphere acting as a stopping means, further bifurcating into two branches (22) that are elastically continued at (23) after said sphere and ending with corresponding engagement means, such as hooks (24) or the like.

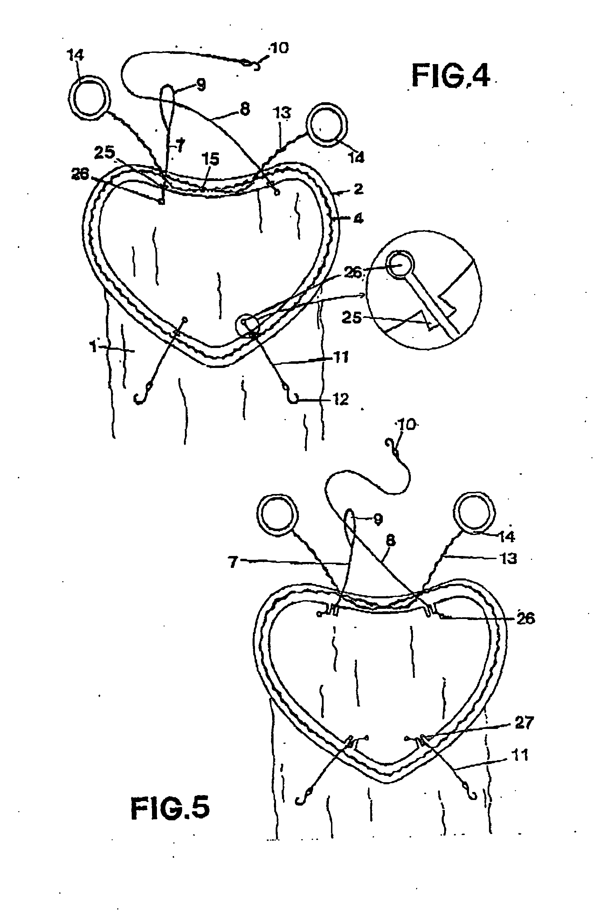

Another alternative embodiment of this invention shown at Figure 4 includes the known bag (1) of laminar thermoplastic material having at its opening said cardioid shaped annular stripe (2). In this construction said upper teeth (6) of the inner edge of said stripe are replaced with trapezoidal gaps (25) capable to lead said threads (11), in this instance attached to the bag (1) at its engagement places (16). Similarly threads (7, 8) are placed anchored to the bag at equivalent sites (26) adjacently placed. The bag's closing cord or string (13) ending with said rings (14) is placed in the same manner as depicted in Figure 1.

The alternative embodiment illustrated at Figure 5, equivalent to the ones above explained, includes all the basic components of the invention with only a slight modification of the inner contour of the cardioid stripe (2) in which it includes guides shaped as forks (27) distributed in the upper and lower regions thereof in pairs, allowing to drive through them said threads (7, 8, 11) in the same manner as above explained.

### How this invention works:

The above stated explanation of the several components of this invention as well as their nature as given above is completed as follows with the detailed description of the functional and operative relationship of said components and its given results, according to the enclosed drawings.

The device of the invention can be applied to any breed of dogs in order to enable to collect said dog's excrements at the same instant they are produced. To this end the dog conveniently may wear a harness, including a chest harness of a commercially available design, or adequate engagement means capable to retain in place said device when fitted to a dog.

This device is placed on the dog with its opening (3) facing the anus of the animal -A- while the concavity (5) of the annular cardioid stripe (2) is placed adjacent to the tail -R- being the above the reason for this particular shape of said stripe.

According to Figures 1 and 2, threads (7, 8) as placed around the animal's tail and portion (8) are threaded through the loop (9), proceeding next to hook the means (10) to the harness -C- dressing the animal. Is to be noticed that said thread gently embraces the base of the dog's tail without exerting undue pressure on said tail, thus defining a sure anchorage for the device and when it is applied a traction on thread (8) for its engagement, it rounds the tail -R-without strangling it.

The elastic threads (or elastic strings) (11) extends forward adjacent to the inner hind legs of the animal and they are engaged by hooks (12) to the engagement means - C - sported by the animal.

When it is wished to withdraw the device, once it purpose has been fulfilled, the knot (15) is tightened gently pulling from the rings (14) at the end of cord (13). As said cord is being tightened closing at the same time the bag (1) opening, threads (7, 8, 11) are detached from behind said annular element (2).

In this way it is easily completed the closing of said opening without any risk of spilling its contents, proceeding after this to discard the bag without any further inconveniences, hygiene problems or environmental contamination. The now detached lateral stays or threads may be also discarded.

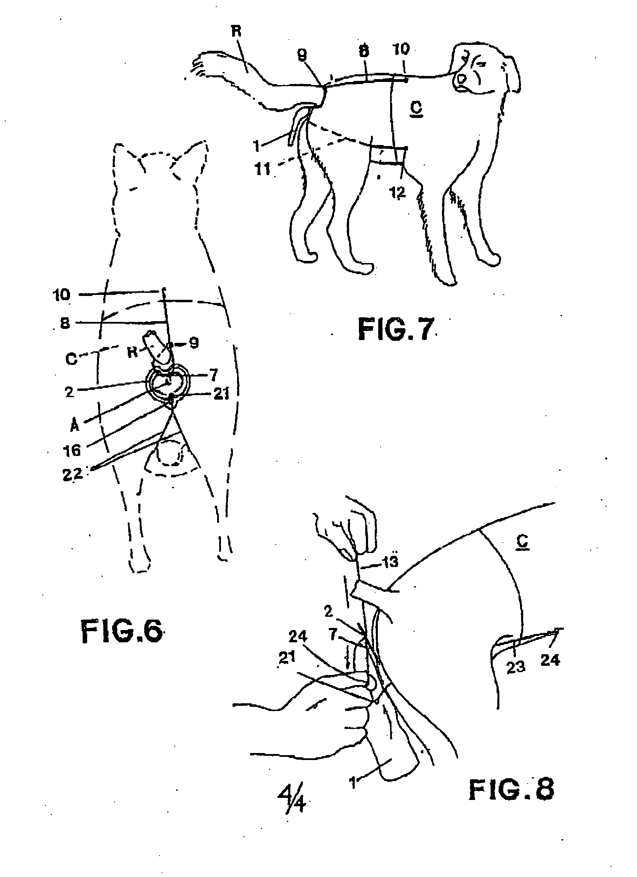

In the construction according to Figures 4 and 5, the hooks (10, 12) are disengaged from the tensioning threads or strings and when the knot 815) is being tightened acting on the rings (14), the bag (1) is closed pulling them along to be also discarded. According to the embodiment of Figures 3 and 8, the hook (24) is also disengaged and knot (15) is also tightened pulling from the rings (14) places at the ends of the cord (13), as shown by the arrows in Figure 8.

When it is being pulled the cord closing from behind of said stripe (2) the opening of the bag (1), it also pushed the small sphere (21) dislodging it from the slot (16) and letting it fall, as it is also depicted in Figure 8, simultaneously dropping from the bag its lateral staying threads or strings (22, 23) which can then be also discarded.

In the case depicted at Figure 3, the fitting of this device is completed by engaging the sphere (21) into the slot (16) or the annular element (2), the bifurcated lengths (22, 23) are extended flanking the things of the dog without touching its genitals and without touching the legs, continuing at both sides of the body until they are laterally engaged at the adequate height in the dog's harness -C-. Said elastic threads or strings constituting lengths (7, 8, 23) of this device are used to adapt and apply it to the various sizes of dogs, while at the same it ensures the correct positioning of this device.

The complementary bifurcated or branched length (22, 23) works as stays in order to ensure the correct fitting of this device at its proper position, completing in this manner three anchoring points in perfect equilibrium.

When arises the need to withdraw this device whenever its purpose has been accomplished, as shown at Figure 8 it is disengaged the hook (10) attached to the harness over the back of the animal while the knot (15) is also tightened by gently pulling from the rings (14) at the end of the cord (13), according to the arrows in said figure. When the cord is closing the opening of the bag (1) behind the annular element (2), it pushes on the sphere (21) dislodging it from its seat on the groove (16) allowing it to fall and at the same time releasing the bag from its lateral staying threads or strings (22, 23), as it is also illustrated in Figure 8.

The closing of the bag is easily achieved without any possibility of spilling its contents, proceeding to its disposal without incurring in any contamination problems either for the user or the environment, with full hygienic and good health conditions. Said lateral stays and then released and may be also discarded.

One of the possible embodiments of this invention has been explained and illustrated in the above description as well as an explanation how it performs, including an example of its specific use. This instant invention is completed by the following claims.

## Claims

1. Device comprising a disposable bag (1) for the collection of animal excrements, applicable to domestic animals such as dogs or the like, capable of acting as a collecting device effectively protecting both the user and the environment from the animal's depositions, whereby the bag has around its opening a tuck (4) forming a perimetral channel or conduit within which slides a cord (13) the free ends of said cord (13) emerging from said tuck (4) defining the closing means of the bag (1); attached to said opening (3) and on its same plane, for attachment around the animal's anal orifice and within the tuck (4) is placed an annular semi-rigid element (2) that has in its upper and lower parts thereof means that attach them to a corresponding set of substantially elastic threads (7, 8, 11) with their free ends engageable with said domestic animal; of said elastic threads (7, 8) one of them (7) has a shorter length than another and is connected to the other longer elastic thread (8) between the ends thereof for closing around the animal is tail, while the other elastic threads (11) are anchorable to the body of the animal, these elastic threads (7, 8, 11) providing the positioning means of this device to the animal's body with the opening of said annular element (2) and the opening of the bag placed around the anal orifice of the animal.

2. Device, according to claim 1, wherein in coincidence to each of the threads attachment means placed at the outer perimeter of the annular element, its inner perimeter has a set of corresponding seats for a portion of said bag's surface adjacent to said tuck (4), being retained said portion of bag surface by retaining means temporarily connecting said portion of bag to said seats; interposed between said seats and said portion of bag's surface it is placed a portion of the cord (13) sliding within the tuck (4), determining said cord (4) when pulled the closing of the bag and the simultaneous detachment of the bag from said attachment means.

3. Device, according to claims 1 or 2, where the a string (13) coincidental with said annular element (2) is placed defining a simple knot (15) in correspondence to the upper concavity (5) of the cardioid shaped annular element (2), having the extensions of said string corresponding rings (14) at their free ends.

4. Device, according to claim 2 or 3, wherein retaining means temporarily connecting said portion of bag to said seats is a length of elastic thread looping (L) around this portion of the bag surface.

5. Device, according to claims 2 to 4, wherein each one of said engagement projections constitutes a pair of adjacent triangular projections (6) having in the proximity of their base an eyelet (6a) through which is threaded the corresponding elastic thread (7, 8, 11) and each one of these threads has at one of their ends a loop engaging said projection.

6. Device, according to any previous claim, wherein said annular element (2) describes a concavity (5); at the lower and inner part of this annular element (2) it has a small slot (16) and in its upper part two orifices (18) are symmetrically placed at each side of said concavity (5), determining said slot (16) and orifices (18) engagement means for an end of each elastic threads (7, 8, 11); of these threads, one of them is shorter having at its free end a loop (9) through which it is threaded a longer elastic thread with a hook (12) means at its free end.

7. Device, according to any previous claim, wherein the annular element (3) is provided with trapezoidal slots (25) and vertical slots (27) in the form of forks acting as guides for said elastic threads (7, 8, 11).

8. Device, according to any previous claim, wherein said annular element (2) is a coplanar strip shaped as a cardioid with its upper concavity (5) placed adjacent to the base of the animal's tail and around its anal orifice.

9. Device, according to claim any previous claim, wherein said elastic threads (7, 8, 11) are attached to said annular element (2) in the proximity of the bag's opening.

10. Device, according to any previous claim, wherein said seats at the lower portion of the inner perimeter of the annular strip (3) are at least one slot (16) while at its upper portions it has at least two orifices (18) symmetrically placed at each side of the vertical axis of said annular stripe having attached to said orifices (18) the corresponding elastic threads (7, 8, 11); said slot (16) defines the seat for a small spherical body (21) that is displaced by said cord when the ends of the cord are pulled closing the bag.

11. Device, according to claims any previous claim, where the elastic threads (7, 8, 11) engaged to the domestic animal have at their free ends corresponding hooks (10, 12).

12. Device, according to claims any previous claim, where at least one of these substantially elastic thread-like elements (7), ends in a loop (9) through which the adjacent thread-like element (8) functionally passed.

## Patentansprüche

1. Vorrichtung mit einem Wegwerfbeutel (1) zum Aufsammeln von Tieroxkrementen, anwendbar bei Haustieren wie Hunden oder dergleichen, die als Aufsammelvorrichtung fungieren kann, die sowohl den Benutzer, als auch die Umwelt vor den Ausscheidungen des Tieres effektiv schützt, wobei der Beutel um seine Öffnung herum einen Saum (4) hat, der einen Randkanal oder Randleitung bildet, in derem/dessen Inneren eine schnur (13) gleitet, wobei die freien Enden der genannten Schnur (13), die aus dem genannten Saum (4) heraus treten, die Schließmittel des Beutels (1) bestimmen; wobei an der genannten Öffnung (3) und an ihrer gleichen Ebene zur Befestigung um die Analöffnung des Tieres herum und innerhalb des Saumes (4) ein ringförmiges, halbstarres Element (2) positioniert ist, das an seiner Ober- und Unterseite derselben Mittel hat, die es an einem entsprechenden Verbund von im Wesentlichen elastischen Fäden (7, 8, 11) befestigen, wobei deren freien Enden mit dem genannten Haustier in Eingriff kommen können; wobei von den genannten elastischen Fäden (7, 8) einer davon (7) eine kürzere Länge als der Andere hat, und mit dem anderen längeren, elastischen Faden (8) zwischen deren Enden zum Schließen um das Hinterteil des Tieres herum verbunden ist, während die anderen elastischen Fäden (11) an dem Körper des Tieres verankert werden können, wobei diese elastischen Fäden (7, 8, 11) die Positionierungsmittel dieser Vorrichtung an dem Körper des Tieres bilden, wobei die Öffnung des genannten ringförmigen Elementes (2) und die Öffnung des Beutels um die Analöffnung des Tieres herum positioniert sind.

2. Vorrichtung nach Anspruch 1, bei der in Übereinstimmung zu jedem der am äußeren Umfang des ringförmigen Elementes positionierten Fadenbefestigungsmittel ihr innerer Umfang einen Verbund von entsprechenden Sitzen für einen Teil der genannten Oberfläche des Beutels hat, die zu dem genannten Saum (4) benachbart gelegen ist, wobei der genannte Teil der Oberfläche des Beutels durch Fixiermittel fixiert ist, die zeitweise den genannten Beutelteil an den genannten Sitzen fixieren; wobei zwischen den genannten sitzen und dem genannten Teil der Oberfläche des Beutels ein Teil der Schnur (13) positioniert ist, die innerhalb des Saumes (4) gleitet, wobei die genannte Schnur (4), wenn sie gezogen wird, das Schließen des Beutels und das gleichzeitige Entfernen des Beutels von den genannten Befestigungsmitteln bestimmt.

3. Vorrichtung nach den Ansprüchen 1 oder 2, bei der eine mit dem genannten ringförmigen Element (2) übereinstimmende Kordel (13) so positioniert ist, dass sie einen einfachen Knoten (15) in Übereinstimmung mit der oberen Wölbung (5) des herz- und ringförmigen Elementes (2) bestimmt, wobei die Verlängerungen der genannten Kordel entsprechende Ringe (14) an ihren freien Enden haben.

4. Vorrichtung nach Anspruch 2 oder 3, bei der die Fixierungsmittel, die zeitweise das genannte Teil des Beutels mit den genannten Sitzen verbinden, eine Länge eines elastischen Fadens sind, der sich um dieses Teil der Oberfläche des Beutels windet (L).

5. Vorrichtung nach den Ansprüchen 2 bis 4, bei der jeder der genannten Eingriffsüberstände ein Paar von benachbarten dreieckigen Überständen (6) bildet, die in der Nähe ihrer Basis eine Öse (6a) haben, durch die der entsprechende elastische Faden (7, 8, 11) eingefädelt wird, und wobei jeder dieser Fäden an einem ihrer Enden eine mit dem genannten Überstand in Eingriff stehende Schleife hat.

6. Vorrichtung nach einem der vorherigen Ansprüche, bei der das genannte ringförmige Element (2) eine Wölbung (5) beschreibt; wobei an dem unteren und inneren Teil dieses ringförmigen Elementes (2) es einen kleinen Schlitz (16) hat, und an seinem oberen Teil zwei Löcher (18) symmetrisch an jeder Seite der genannten Wölbung (5) positioniert sind, wobei die genannten Schlitz (16) und Löcher (18) Eingriffsmittel für ein Ende jedes elastischen Fadens (7, 8, 11) bestimmen; wobei von diesen Fäden einer kürzer ist, wobei er an seinem freien Ende eine Schleife (9) hat, durch welche ein längerer elastischer Faden mit einem Hakenmittel (12) an seinem freien Ende gefädelt ist.

7. Vorrichtung nach einem der vorherigen Ansprüche, bei der das ringförmige Element (3) mit trapezförmigen Schlitzen (25) und vertikalen Schlitzen (27)in Form von Gabeln versehen ist, die als Führungen für die genannten elastischen Fäden (7, 8, 11) fungieren.

8. Vorrichtung nach einem der vorherigen Ansprüche, bei der das genannte ringförmige Element (2) ein planparalleles, herzförmiges Band ist, wobei dessen obere Wölbung (5) benachbart zur Basis des Hinterteils des Tieres und um dessen Analöffnung herum positioniert ist.

9. Vorrichtung nach einem der vorherigen Ansprüche, bei der die genannten elastischen Fäden (7, 8, 11) an dem genannten ringförmigen Element (2) in der Nähe der Öffnung des Beutels befestigt sind.

10. vorrichtung nach einem der vorherigen Ansprüche, bei der die genannten Sitze an dem unteren Teil des inneren Umfanges des ringförmigen Bandes (3) zumindest ein Schlitz (16) sind, während an ihren oberen Teilen zumindest zwei Löcher (18) symmetrisch an jeder Seite der vertikalen Achse des genannten ringförmigen Bandes positioniert sind, wobei an den genannten Löchern (18) die entsprechenden elastischen Fäden (7, 8, 11) befestigt sind; wobei der genannte Schlitz (16) den Sitz für einen kleinen kugelförmigen Körper (21) bestimmt, der durch die genannte Schnur versetzt wird, wenn an den Enden der Schnur gezogen wird, wodurch sich der Beutel schließt.

11. Vorrichtung nach einem der vorherigen Ansprüche, bei der die elastischen Fäden (7, 8, 11), die mit dem Haustier in Eingriff stehen, entsprechende Haken (10, 12) an ihren Freien Enden haben.

12. Vorrichtung nach einem der vorherigen Ansprüche, bei der zumindest eines dieser im Wesentlichen elastischen fadenartigen Elemente (7) in einer Schleife (9) endet, durch welche das benachbarte fadenartige Element (8) funktionsgemäß hindurchgeht.

## Revendications

1. Dispositif comprenant un sac jetable (1) pour le ramassage d'excrément d'animaux, applicable à des animaux domestiques tels que les chiens ou analogues, capable d'agir comme un dispositif de ramassage protégeant efficacement aussi bien l'utilisateur que l'environnement des déposition des animaux, et par conséquent le sac a autour de son ouverture, un pli (4) formant un canal ou conduit périmétral au sein duquel glisse une corde (13), les extrémités libres de ladite corde (13) émergeant dudit pli définissent les moyens de fermeture du sac (1), attaché à ladite ouverture (3) et sur son même plan pour attachement autour de l'orifice anal de l'animal et dans le pli (4) est placé un élément annulaire semi-rigide (2) qui a dans ses parties supérieure et inférieure des moyens qui les attachent à un ensemble correspondant de fils essentiellement élastiques (7, 8, 11) avec leur extrémités libres susceptibles de s'accoupler avec ledit animal domestique ; desdits fils élastiques (7, 8) l'un d'eux (7) a un longueur plus courte que l'autre et il est connecté à l'autre fil élastique plus long (8) entre ses extrémités pour se fermer autour de la queue de l'animal, tandis que les autres fils élastiques (11) peuvent s'ancrer au corps de l'animal, ces fils élastiques (7, 8, 11) fournissant les moyens de positionnement de ce dispositif au corps de l'animal avec l'ouverture dudit élément annulaire (2) et l'ouverture du sac mis en place autour de l'orifice anal de l'animal.

2. Dispositif selon la revendication 1, dans lequel en coïncidence avec chacun des moyens d'attachement de fils mis en place sur le périmètre extérieur de l'élément annulaire, son périmètre intérieur a un ensemble de sièges correspondants pour une portion de ladite surface de sac attenante audit pli (4), ladite portion de surface de sac étant reLenue par des moyens de rétention qui connectent temporairement ladite portion de sac auxdits sièges; interposée entre lesdits sièges et ladite portion de surface de sac est placée une portion de la corde (13) qui glisse dans le pli (4), ladite corde (4) lorsque l'on Lire sur elle déterminant la fermeture du sac et le détachement simultané du sac par rapport aux moyens d'attachement.

3. Dispositif selon les revendications 1 ou 2, où une cordelette (13) en coïncidence avec ledit élément annulaire (2) est placée en définissant un simple noeud (15) en correspondance avec la concavité supérieure (5) de l'élément annulaire sous forme cardioïde (2), les extensions de ladite cordelette ayant des anneaux (14) correspondants à leurs extrémités libres.

4. Dispositif selon la revendication 2 ou 3, dans lequel les moyens de rétention qui connectent temporellement ladite portion de sac audits sièges est une longueur de fils élastique (L) faisant un boucle autour de cette portion de la surface de sac.

5. Dispositif selon les revendications 2 a 4, dans lequel chacune desdites projections d'engagement constitue une paire de projections triangulaires attenantes (6) ayant à la proximité de leur base un oeillet (6a) à travers lequel est enfilé le fil élastique (7, 8, 11) correspondant y chacun des ces fils a à une de ses extrémités une boucle qui engage ladite projection.

6. Dispositif selon l'une quelconque des revendications précédentes, dans lequel ledit élément annulaire (2) décrit une concavité (5) ; dans la partie inférieure et intérieure de cet élément annulaire (2) il a une petite rainure (16) et dans sa partie supérieure deux orifices (18) sont aménagés symétriquement de chaque côté de ladite concavité (5), ladite rainure (16) et lesdits orifices (18) déterminant des moyens d'accouplement pour une extrémité de chaque fils élastique (7, 8, 11) ; de ces fils, l'un d'eux est plus court en ayant à son extrémité libre une boucle (9) à travers laquelle on enfile un fil élastique plus long avec un moyen de crochet (12) à son extrémité libre.

7. Dispositif selon l'une quelconque des revendications précédentes, dans lequel l'élément annulaire (3) est pourvu de rainures trapézoïdales (25) et de rainures verticales (27) sous forme de fourche qui agissent en guise de guides pour lesdits fils élastiques (7, 8, 11).

8. Dispositif selon l'une quelconque des revendications précédentes, dans lequel ledit élément annulaire (2) est une bande coplanaire sous forme de cardioïde avec sa concavité supérieure (5) placée attenante à la base de la queue de l'animale et autour de son orifice anal.

9. Dispositif selon l'une quelconque des revendications précédentes, dans lequel lesdits fils élastiques (7, 8, 11) sont attachés audit élément annulaire (2) dans la proximité de l'ouverture du sac.

10. Dispositif selon l'une quelconque des revendications précédentes, dans lequel lesdits sièges dans la portion inférieure du périmètre intérieur de la bande annulaire (3) sont au moins une rainure (16) tandis que dans sa portion supérieure elle a au moins deux orifices (18) placés symétriquement de chaque côté de l'axe vertical de ladite bande annulaire, les fils élastiques (7, 8, 11) correspondants étant attachés auxdits orifices (18) ; ladite rainure (16) définit le siège pour un corps sphérique (21) plus petit qui est déplacé par ladite corde lorsque l'on tire sur l'extrémité de la corde en fermant le sac.

11. Dispositif selon l'une quelconque des revendications précédentes, où les fils élastiques (7, 8, 11) accouplés à l'animal domestique ont à leurs extrémités libres des crochets correspondants (10, 12).

12. Dispositifs selon l'une quelconque des revendications précédentes, où au moins un de ces éléments de type fil essentiellement élastiques (7), termine dans une boucle (9) à travers laquelle passe fonctionnellement l'élément de type fil attentant.
